# EUROPÄISCHE PATENTSCHRIFT

(11) **EP 1 690 316 B1**
(45) Veröffentlichungstag und Bekanntmachung des Hinweises auf die Patenterteilung: **04.04.2007**
(21) Anmeldenummer: 04801185.2
(22) Anmeldetag: 01.12.2004
(51) Int. Cl.: H01Q 1/24, H04M 1/24, G01R 31/28, G01R 29/10

(54) **ANTENNENKOPPLER**
ANTENNA COUPLER
COUPLEUR D'ANTENNE

(30) Priorität: 01.12.2003 DE 10356087
(43) Veröffentlichungstag der Anmeldung: 16.08.2006
(73) Patentinhaber: Willtek Communications GmbH, 85737 Ismaning (DE)
(72) Erfinder: HACKENBROICH, Wilfried, 83607 Holzkirchen (DE); SCHNEIDER, Barbara, 85540 Haar (DE)
(74) Vertreter: Geyer, Fehners & Partner
(86) Internationale Anmeldenummer: PCT/EP2004/013641
(87) Internationale Veröffentlichungsnummer: WO 2005/055361

(56) Entgegenhaltungen:
- EP-A- 0 955 549
- WO-A-00/76077
- WO-A-02/103840
- DE-A1- 19 917 661
- DE-C1- 19 732 639

## Beschreibung

Die Erfindung bezieht sich auf einen Antennenkoppler zum Testen von Mobilfunkgeräten, der ein Antennenelement zur Funkkommunikation mit dem Mobilfunkgerät und ein Aufnahmeelement zum Halten des Mobilfunkgerätes aufweist.

Ein solcher Antennenkoppler ist beispielsweise in der DE 19 732 639 C1 geschildert. Er wird zum Testen von Mobilfunkgeräten, insbesondere von Mobiltelefonen, verwendet. Antennenkoppler ermöglichen einen vollständigen Endtest eines Mobilfunkgerätes, da auch Funkeigenschaften des Mobilfunkgerätes, insbesondere die Antennenwirkung, überprüft werden können. Würde man stattdessen auf einen an Mobilfunkgeräten oftmals vorhandenen Hochfrequenz-Anschluß zum Funktionstest zurückgreifen, so würde die Antenne gar nicht getestet und Antennenfehler wären nicht detektierbar.

Die EP 0 955 549 A1 beschreibt ebenfalls einem solchen Antennenkoppler, dessen Antennenelement als Flächenantenne ausgebildet ist und seitlich neben dem auf einem Gestell befestigten Mobilfunkgerät an das Gestell geschraubt ist. Dabei sind verschiedene Schraubpositionen möglich.

Die DE 19917661 A1 beschreibt eine Vorrichtung zur Vermessung eines Funkfeldes, die eine Sonde aufweist, welche mittels einer Schiebebühne über einem Mobiltelephon verstellt werden kann.

Für die Kopplung mit einem Mobilfunkgerät kommen prinzipiell drei verschiedene Mechanismen in Frage. Bei einer induktiven Kopplung wird als Koppelelement eine Spule eingesetzt, in deren Mitte die Antenne des Mobilfunkgerätes eingebracht wird. Das Hochfrequenzfeld der Antenne des Mobilfunkgerätes koppelt dann auf die Spule über und kann so für weitere Testzwecke ausgewertet werden. Obwohl induktive Koppelelemente einen sehr hohen Koppelfaktor erzielen, ist die mechanische Ausführung schwierig. Insbesondere ist es zwingend erforderlich, daß die Spule die Antenne des Mobilfunkgerätes umschließt. Bei vermehrt für Mobilfunkgeräte verwendeten Flächenantennen kann eine induktive Kopplung deshalb gar nicht oder nur sehr eingeschränkt verwendet werden, insbesondere wenn Flächenantennen im Gehäuse integriert sind und keinen externen Zugang erlauben. Induktive Kopplungen begegnen jedoch auch meßtechnischen Bedenken, da durch den geringen Abstand zwischen der koppelnden Spule und der Mobilfunkantenne eine Antennenverstimmung mit Veränderung des Fußpunktwiderstandes der Mobilfunkantenne auftreten kann. Eine Pegelverfälschung im Meßbetrieb ist dann die Folge.

Als Alternative zur induktiven Kopplung sind kapazitive Kopplungen bekannt, bei denen einer Mobilfunk-Flächenantenne eine Gegenfläche derart gegenübergestellt wird, daß die beiden Flächen einen Kondensator bilden, über den Hochfrequenz-Energie vom Mobilfunkgerät abgenommen werden kann. Die dabei erreichten Koppelfaktoren hängen jedoch sehr stark vom Abstand der gegenüberstehenden Flächen ab: der Koppelfaktor ändert sich mit dem Abstandsquadrat. Für hohe Koppelfaktoren ist deshalb ein sehr geringer Abstand zwischen den beiden Flächen erforderlich. Abgesehen von durch Abstandsvariationen bedingten Meßfehlern besteht bei kapazitiver Kopplung darüber hinaus ebenfalls die Gefahr, die Wirkung der Mobilfunkgerätantenne dahingehend zu beeinflussen, daß der Fußpunktwiderstand verändert wird. Eine weitere Problemstellung der kapazitiven Kopplungen entsteht durch Reflektionen an der Gegenfläche, die bei manchen Mobilfunkgeräten zu Störungen führen können. Eine Flächenantenne wird auch in der gattungsbildenden EP 0 955 549 A1 beschrieben.

Die DE 19 732 639 C1 schlägt deshalb einen Antennenkoppler vor, bei dem die Kopplung über das Antennenelement erfolgt. Das Antennenelement wird nahe der Antenne des Mobilfunkgerätes angeordnet und ist als abgestimmte Antenne in seiner Wirkung weder kapazitiv noch induktiv. Das Antennenelement führt kaum zu Störeinflüssen und zeigt insbesondere eine vergleichsweise geringere Empfindlichkeit auf Abstandsänderungen. Allerdings ist es unerläßlich, daß das Antennenelement auf die Frequenz des Mobilfunkgerätes abgestimmt ist, wodurch bei bekannten Antennenelementen der abgedeckte Frequenzbereich geringer ist als der Bereich in dem die verschiedenen Mobiltelefonsysteme arbeiten. Der in der DE 19 732 639 C1 geschilderte Antennenkoppler weist deshalb zwei Flächenantennen auf. Eine Dipolantenne ist für einen Frequenzbereich von 1,7 bis 2,0 GHz und eine Schlitzantenne für einen Frequenzbereich um 0,9 GHz vorgesehen, um Mobiltelefone aller gängiger Netze mit testen zu können. Der bekannte Antennenkoppler positioniert das Mobiltelefon so über den beiden Antennen, daß die Mobilteleforiantenne in etwa gleichen Abstand zu jeder der beiden Flächenantennen liegt.

Als Halterung für das Mobiltelefon wird dabei eine Universalhalterung eingesetzt, die das zu prüfende Mobiltelefon am Antennenkoppler festklemmt. Alternativ ist es für Antennenkoppler auch bekannt, individuelle Halterungen zu verwenden, die für bestimmte Mobilgerätetypen konfektioniert sind. Diese Halterungen weisen üblicherweise eine Mulde auf, die ein Mobilfunktelefon bestimmten Typs aufnimmt (vgl. Produktinformation zum Antenna Coupler 4910 der Willtec Communications GmbH, lsmaning, Deutschland).

Der technische Fortschritt bei Mobilfunkgeräten, insbesondere bei Mobiltelefonen und Kleincomputern mit integrierten Mobiltelefonen (sogenannten PDA), führt mittlerweile zu einer steigenden Formenvielfalt bezüglich der Gehäuse und der Lage der Mobilfunkantänne am bzw. im Gehäuse. Um eine reproduzierbare und möglichst optimale Ausrichtung des Mobilfunkgerätes am Antennenkoppler zu erreichen, zeichnet sich deshalb ein Trend zum vermehrten Einsatz individueller Halterungen ab. Dies bringt allerdings Nachteile mit sich, da eine Vielzahl von individuellen Halterungen vorrätig gehalten werden muß und die individuellen Halterungen häufig gewechselt werden müssen.

Der Erfindung liegt deshalb die Aufgabe zugrunde, einen Antennenkoppler der eingangs genannten Art so weiterzubilden, daß mit vermindertem Aufwand eine optimale Positionierung von Mobilfunkgeräten möglichst unabhängig von Gehäuse- und/oder Antennenform erreichbar ist.

Diese Aufgabe wird mit einem Antennenkoppler gemäß Anspruch 1 gelöst.

Der erfindungsgemäße Antennenkoppler erlaubt eine einfache meßtechnische Überprüfung des Mobilfunkgerätes, insbesondere eines Mobiltelefones, da dieses über den Antennenkoppler kabellos an eine Meßeinrichtung angebunden werden kann. Das Mobilfunkgerät wird dazu in das Aufnahmeelement eingelegt und von diesem gehalten. Als Aufnahmeelement kommt jede geeignete Vorrichtung, die das Mobilfunkgerät in reproduzierbarer Stellung hält, in Frage, insbesondere eine Universal-Mobiltelefonhalterung. Über die für das Aufnahmeelement vorgesehene Befestigungseinrichtung kann die Lage des Aufnahmeelementes zum Antennenelement verstellt werden. Dadurch wird das Mobilfunkgerät zuverlässig zum Antennenelement so ausgerichtet, daß sich optimale Koppelfaktoren zwischen dem Mobilfunkgerät und dem Antennenelement ergeben. Die Meßgenauigkeit steigt dadurch ebenso wie die Reproduzierbarkeit. Für letztere ist insbesondere das Merkmal der Befestigungseihnchtüng wichtig, daß das Atifnähmiaelement in wählbarer Lage zum Antennenelement befestigt, d.h. fixiert wird. Die Lösbarkeit dieser Fixierung erlaubt es, eine für die gegebene Meßaufgabe, d.h. für ein vorliegendes Mobilfunkgerät, optimale Stellung zu erreichen und somit die räumliche Signalausbreitung von der Antenne des Mobilfunkgerätes zum Antennenelement zu optimieren.

Das Aufnahmeelement sorgt für die geeignete mechanische Halterung des Mobilfunkgerätes. Form und Konstruktion des Aufnahmeelementes gewährleisten dabei eine reproduzierbare Position des Mobilfunkgerätes im Aufnahmeelement, so daß für ein und dasselbe Mobilfunkgerät in ein und derselben Lage der Befestigungseinrichtung immer die gleiche geometrische Relation zwischen Antenne des Mobilfunkgerätes und Antennerielement des Antennenkoppler gegeben ist. Da das Aufnahmeelement über die Befestigungseinrichtung gegenüber dem Antennenelement lageverstellbar ist, kann man die optimale Stellung der Befestigungseinrichtung mit Aufnahmeelement für jedes Mobilfunkgerät individuell ermitteln und einstellen.

Für maximale Koppelfaktoren zwischen Mobilfunkgerät und Antennenelement ist die Relativlage zwischen Antenne des Mobilfunkgerätes und Antennenelement ausschlaggebend. Es ist wesentlich für die Erfindung, daß das Aufnahmeelement nicht vorgegeben fest zum Antennenelement ist, sondern daß diese beiden Bauteile in verschiedenen Relativlagen fixiert werden können. Alternativ oder zusätzlich zum geschilderten Konzept mit lageverstellbarem Aufnahmeelement kann man natürlich auch ein lageverstellbares Antennenelement verwenden. Die genannte Aufgabe wird deshalb auch gelöst durch einen Antennenkoppler zum Testen von Mobilfunkgeräten, der ein Antennenelement zur Funkkommunikation mit dem Mobilfunkgerät und ein Aufnahmeelement zum Halten des Mobilfunkgerätes aufweist, wobei das Antennenelement in verschiedenen Lagen zum Aufnahmeelement lösbar befestigbar ist.

Bei einer solchen Ausgestaltung wird die optimale geometrische Beziehung zwischen Antennenelement und Mobilfunkgerät durch Verstellung der Lage des Antennenelementes erreicht. Bei dieser Variante der Erfindung, die ansonsten der eingangs genannten Variante mit lageverstellbarem Aufnahmeelement entspricht, kann neben der Verstellung des Antennenelementes natürlich auch zusätzlich eine Verstellung des Aufnahmeelementes vorgesehen werden. Die Realisierung der Lageverstellung des Antennenelementes kann auf beliebige geeignete Art und Weise erfolgen und insbesondere die nachfolgend anhand des Aufnahmeelementes geschilderten Prinzipien aufgreifen. Wenn nachfolgend also von der Lageverstellung des Aufnahmeelementes die Rede ist, so ist selbstverständlich eine analoge Anwendung auf die Verstellung des Antennenelementes ebenfalls möglich.

Die lagevärähdefliche Befestigung des Aufnahmeetemehtes kann auf verschiedene Art und Weise erfolgen. Beispielsweise ist es möglich, geeignete Befestigungsmittel am Aufnahmeelement vorzusehen, die das Aufnahmeelement in wählbarer Lage gegenüber dem Antennenkoppler mit dem Antennenelement fixieren. So kommen beispielsweise verstellbare Schraubbefestigungen, insbesondere Schraubbefestigungen in Langlöchern, ebenso in Frage wie Schnellverschlüsse oder Klemmechaniken.

Zum Zwecke einer kompakten Bauweise des Antennenkopplers ist es vorteilhaft, als Antennenelement eine Flächenantenne zu verwenden. Die Lageverstellung zwischen Antennenelement und Aufnahmeelement wird bei solchen Antennenelementen, die vorzugsweise in Streifenleitertechnik gebildete Antennen verwenden, günstigerweise eine Parallelverschiebung zwischen Aufnahmeelement und Flächenantenne bewirken, da dann auf einfache Art und Weise für optimale Kopplung gesorgt werden kann.

Für die meisten Anwendungsfälle wird eine lösbare Befestigung des Antennenelementes bzw. des Aufnahmeelementes genügen, die mehrere diskrete Stellungen vorsieht. Besonders einfach kann dies in Form eines Steckmechanismusses realisiert werden, der das Aufnahmeelement an einem das Antennenelement haltenden Rahmen oder Gehäuse befestig, wobei verschiedene Steckpositionen entsprechend den verschiedenen Lagen vorgesehen sind. Durch einfaches Umstecken des Aufnahmeelementes bzw. des Antennenelementes kann so die für eine optimale Kopplung erforderliche Relativlage hergestellt werden.

Einen Befestigungsmechanismus, der prinzipiell eine frei wählbare Verschiebung ermöglicht, ist dagegen in Form eines Schlittens gegeben, der das Aufnahmeelement bzw. das Antennenelement gegenüber dem Antennenelement bzw. dem Aufnahmeelement zumindest einachsig verschieblich hält. Ein Schlitten ist weiter ein Beispiel für eine Realisierung des Antennenkopplers, bei dem die Befestigungseinrichtung das Aufnahmeelement bzw. das Antennenelement trägt. Die Befestigungseinrichtung ist also vorteilhafterweise als zwischen Aufnahmeelement und Antennenelement geschaltetes Bauteil ausgebildet, an dem einerseits das Aufnahmeelement bzw. das Antennenelement fixiert ist und das andererseits die gewünschte Verstellbarkeit bewirkt.

Für die meisten Fälle wird bei der Verwendung eines Schlittens eine einachsige Verstellung ausreichen, insbesondere dann, wenn der erreichbare Koppelfaktor in einer Raumrichtung sehr viel stärker von der gegenseitigen Lage der Antennen abhängt, als in einer anderen Richtung. Ein solcher Fall ist bei als Flächenantennen ausgebildeten Dipolen regelmäßig gegeben. Ist allerdings eine räumliche Inhomogenität des von der Antenne aufgenommenen bzw. abgestrahlten Hoch-Frequenzfetdes nicht vorhanden, kann sich auch eine mehrachsige Verschiebung, insbesondere eine zweidimensionale Verschiebung in einer Fläche, die parallel zur Fläche der Flächenantenne liegt als besonders vorteilhaft, anbieten.

Wie bereits erwähnt, ermöglicht ein Schiebemechanismus, für den der geschilderte Schlitten ein Beispiel ist, eine prinzipiell kontinuierliche Verschiebung. Um jedoch eine möglichst reproduzierbare Messung zu erreichen, hat es sich im täglichen Betrieb als günstig erwiesen, wenn eine bei einem Mobilfunkgerät einmal verwendete Relativlage zwischen Antennenelement und Aufnahmeelement möglichst einfach wiederholbar eingestellt werden kann. Für solche Anforderungen ist die Verwendung eines Rastmechanismusses vorteilhaft, der bei prinzipiell kontinuierlicher Lageverstellung ein wiederholtes Anfahren ein- und derselben Position unkompliziert erlaubt. Der Rastmechanismus kann beispielsweise den eingangs erwähnten Schlitten in verschiedenen Stellungen, die den verschiedenen Lagen zugeordnet sind, lösbar arretieren. Ein Lösen der Arretierung kann der Rastmechanismus auf verschiedene Art und Weise vorsehen. So können beispielsweise Sperrklinken verwendet werden, die manuell gelöst werden müssen, um die Arretierung aufzuheben. Auch kann man geeignete Spannmittel, insbesondere elastische Mittel oder Federn, verwenden, die ein Lösen der Arretierung bei Aufbringen einer gewissen Verschiebungskraft erlauben. So kann beispielsweise der Rastmechanismus federgespannte Kugeln verwenden, die zur Arretierung in geeignete Nuten eingreifen.

Bei der bereits erwähnten Verwendung eines Schlittens für die Befestigungseinrichtung ist es vorteilhaft, an einen das Aufnahmeelement bzw. das Antennenelement haltenden Rahmen oder Gehäuse eine geeignete Nut auszubilden, die den Schlitten führt. Damit läßt sich eine einfach herzustellende und platzsparende Bauweise realisieren.

Bei der Verwendung mit verschiedensten Mobilfunkgeräten wird man den Antennenkoppler vor jeder Messung mit einem neuen Mobilfunkgerätetyp entsprechend einstellen, d.h. die entsprechende Relativlage zwischen Aufnahmeelement, das das Mobilfunkgerät aufnimmt, und Antennenelement herstellen. Um dies reproduzierbar vornehmen zu können, ist es vorteilhaft, eine Zeigeeinrichtung sowie damit zusammenwirkende Markierungen vorzusehen, die die Stellung des Aufnahmeelementes bzw. des Antennenelementes anzeigen. Bei der bereits erwähnten Schlittenlösung kann man die Zeigeeinrichtung am Schlitten anbringen und die Markierungen am Rahmen oder Gehäuse, an dem der Schlitten geführt wird, vorsehen.

Eine zusätzliche Erleichterung beim Auffinden der optimalen Position bietet eine über dem Antennenelement angebrachte Grafik, die ein Zentrum des Antennenelementes anzeigt, in dem eine maximale Funk-Koppelwirkung gegeben ist. Der Benutzer kann dann auf einfache Weise das Mobilfunkgerät zur Antenne so einstellen, daß sich die Antenne des Mobilfunkgerätes über dem Zentrum mit maximaler Koppelwirkung befindet. Bei einer Dipolantenne liegt das Zentrum maximaler Koppelwirkung beispielsweise in der Mitte des Dipols.

Die Erfindung wird nachfolgend unter Bezugnahme auf die Zeichnungen beispielhalber noch näher erläutert. In den Zeichnungen zeigt:
- Fig. 1: eine perspektivische Darstellung eines Antennenkopplers,
- Fig. 2: eine Draufsicht auf den Antennenkoppler der Figur 1,
- Fig. 3: den Antennenkoppler.der Figur 1 in einer Seitenansicht von links,
- Fig. 4: eine Schnittdarstellung durch den Antennenkoppler der Figur 1 entlang der Linie A-A der Figur 2,
- Fig. 5: ein Rahmenelement des Antennenkopplers der Figur 1,
- Fig. 6: eine Draufsicht auf das Rahmenelement der Figur 5,
- Fig. 7: eine Seitenansicht des Rahmenelements der Figur 5 von links,
- Fig. 8: eine Schnittdarstellung durch das Rahmenelement der Figur 5 entlang der Linie A-A der Figur 6,
- Fig. 9: eine perspektivische Darstellung eines Schlittens des Antennenkopplers der Figur 1,
- Fig. 10: eine Draufsicht auf den Schlitten der Figur 9,
- Fig. 11: eine Schnittdarstellung durch den Schlitten der Figur 10,
- Fig. 12: den Schlitten der Figur 9 von unten, wobei zusätzlich die Schnittlinie eingezeichnet ist, entlang der die Schnittdarstellung der Figur 11 gewonnen wurde,
- Fig. 13: eine Seitenansicht des Schlittens der Figur 9 von links,
- Fig. 14: eine Detailvergrößerung der Darstellung der Figur 11 und
- Fig. 15: eine Grafikfolie, die am Antennenkoppler der Figur 1 angebracht werden kann.

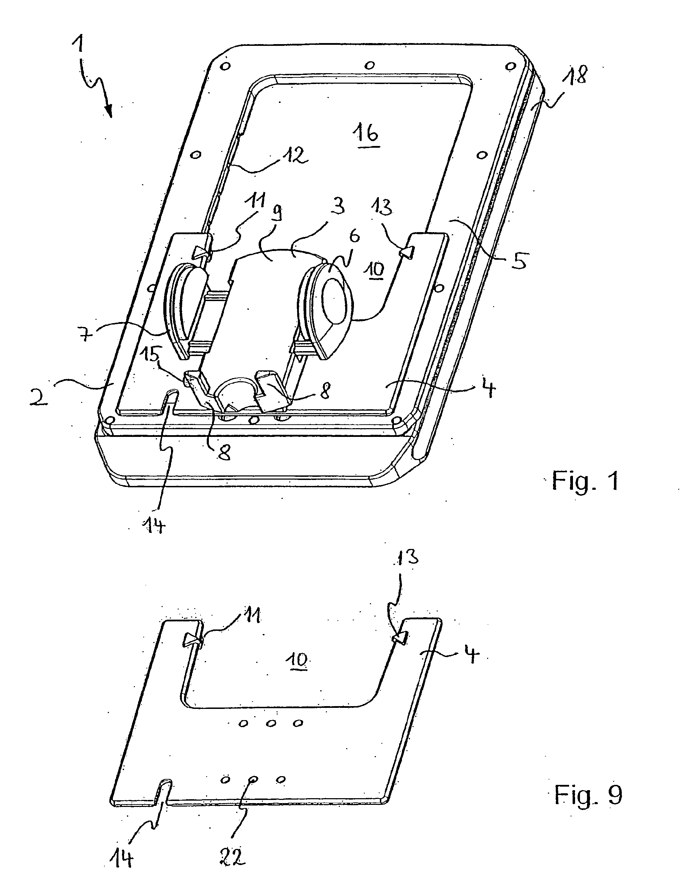

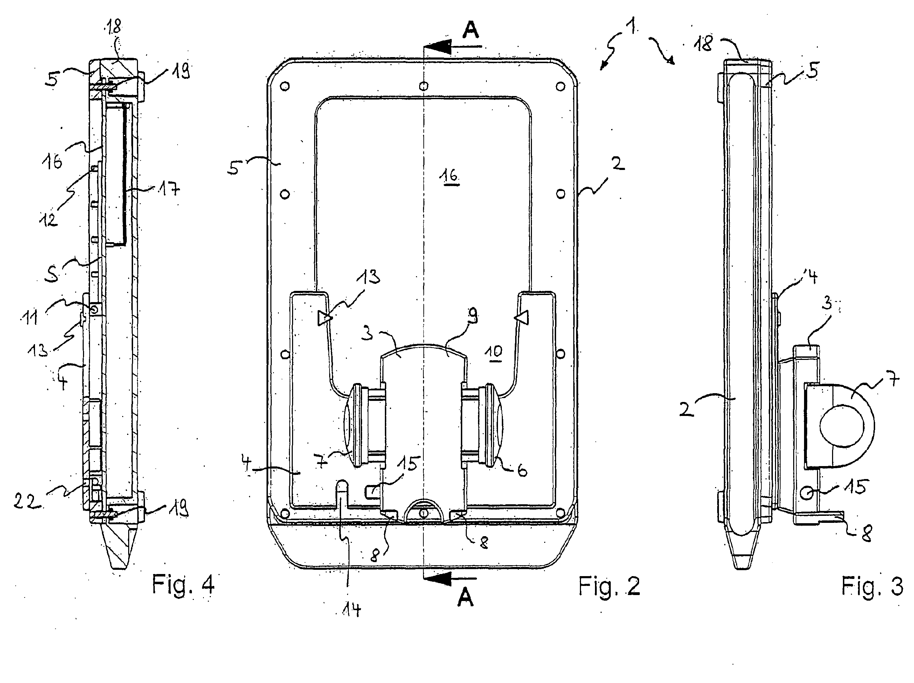

Figur 1 zeigt perspektivisch einen Antennenkoppler 1, der dazu dient ein (nicht dargestelltes) Mobilfunkgerät kabellos in ein Meßsystem einzubinden. Der in den Figuren 2, 3 und 4 auch in Draufsicht, Seitenansicht und Schnittdarstellung zu sehende Antennenkoppler 1 stellt eine Funkkommunikation zum Mobilfunkgerät her und ist seinerseits (auf nicht dargestellte Art und Weise) drahtgebunden mit einer Meßeinrichtung verbunden.

Der Antennenkoppler 1 weist ein Gehäuse 2 auf, auf dem eine Halterung 3 ausgebildet ist, die im dargestellten Ausführungsbeispiel als Universal-Mobilfunkhalterung realisiert ist. Die Halterung 3 ist auf einem Schlitten 4 befestigt, der an einem Rahmen 5, welcher die Oberseite des Gehäuses 2 bildet, verschieblich geführt ist.

Zum Messen wird das Mobilfunkgerät in die Halterung 3 eingelegt und bei der in Figur 1 dargestellten Bauweise mit Klemmbacken 6,7 der Halterung 3 fixiert. An der Unterseite der Halterung liegt das Mobilfunkgerät an einem Anschlag 8, so daß es auf einer Auflagefläche 9 von den Klemmbacken 6, 7 und dem Anschlag 8 sicher gehalten ist.

Je nach Bauart steht das Mobilfunkgerät dabei mehr oder weniger über die Halterung 3 über. Bei den meisten Mobilfunkgeräten liegt in diesem überstehenden Bereich die Antenne. Die Funkkommunikation erfolgt dann zwischen der Antenne des Mobilfunkgerätes sowie einer Antenne 16, die im Gehäuse 2 unterhalb des Rahmens 5 befestigt ist. Die Antenne des Antennenkopplers ist in der hier beschriebenen Ausführungsform als Flächenantenne 16 in Streifenleitertechnik ausgebildet, wie dies beispielsweise die DE 197 32 639 C1, auf deren Offenbarung diesbezüglich voll umfänglich verwiesen wird, schildert.

Um Störungen der Funkkommunikation zu vermeiden, hat der Schlitten 4 eine Ausnehmung 10, so daß kein bzw. möglichst wenig möglicherweise störendes Material zwischen einer über die Halterung 3 ragenden Antenne eines Mobilfunkgerätes und der Flächenantenne 16 des Antennenkopplers 1 zu liegen kommt.

Der Schlitten 4 ist mit einem Rastmechanismus 11 versehen, der zusammen mit am Rahmen 5 ausgebildeten Nuten 12 den Schlitten 4 in verschiedenen Stellungen arretiert. Am Schlitten 4 angebrachte Zeiger 13 erlauben es, die Stellung des Schlittens 4 einfach zu erkennen, wenn über der Flächenantenne 16 (noch zu beschreibende) Markierungen angebracht sind.

Wie die Draufsicht der Figur 2 deutlich zeigt, ist der Schlitten 4 entlang der in Figur 2 eingezeichneten Schnittlinie A-A längs verschieblich. Der Schlitten 4 kann also entlang der längeren Innenkante des Rahmens 5 verschoben werden und mit ihm die darauf angebrachte Halterung 3. Ein auf die Auflagefläche 9 der Halterung 3 gelegtes und mittels der Klemmbacken 6 und 7 fixiertes Mobilfunkgerät kann damit entlang der Achse A-A in optimaler Lage zur Flächenantenne 16 gestellt werden. Da im gezeigten Ausführungsbeispiel die Antenne 16 Dipolcharakteristik hat und entlang dieser Achse der Koppelfaktor der Funkkopplung zwischen Mobilfunkgerät und Flächenantenne 16 sehr viel stärker variiert, als quer zur Achse A-A, genügt hier die Verstellung entlang der Achse A-A.

Die in Figur 1 gezeigte Universal-Halterung 3 ist natürlich nur exemplarisch zu verstehen; es kann jede geeignete Halterung auf dem Schlitten 4 befestig werden. Als Halterung 3 kommt prinzipiell jede Mechanik in Frage, die ein Mobilfunkgerät einer oder mehrerer Bauarten reproduzierbar lagefixieren kann. Zum Lösen der ein Mobiltelefon haltenden Klemmbacken 6 und 7 ist an der Halterung 3 ein Knopf 15 vorgesehen, der einen in der Halterung 3 vorgesehenen, die Klemmbacken 6 und 7 arretierenden Sperrmechanismus freigibt.

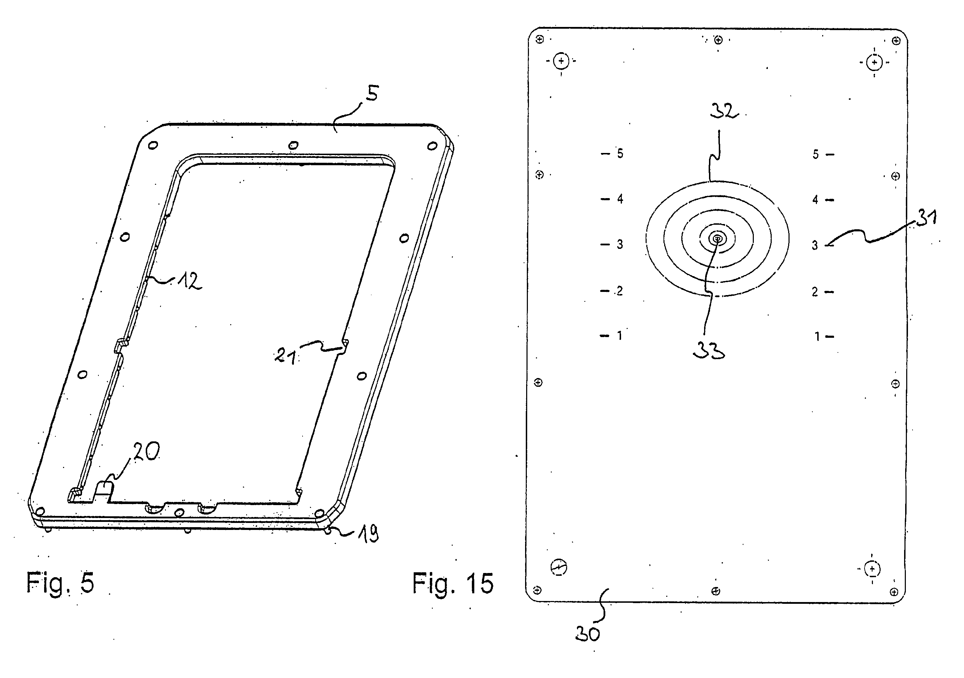

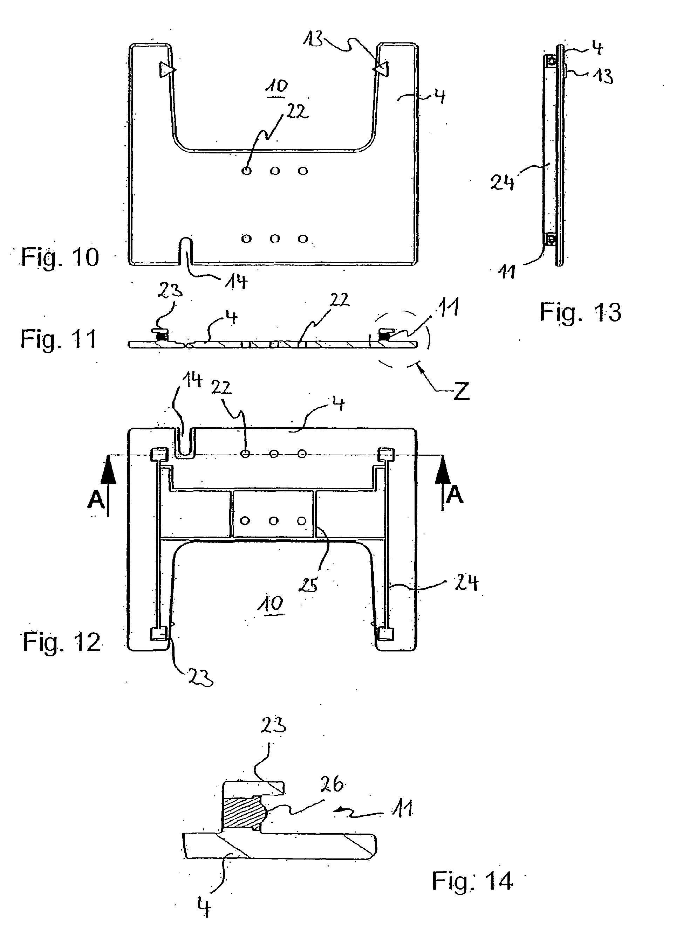

Um zum Wechsel der Halterung den Schlitten 4 entnehmen zu können, weist dieser einen Schlitz 14 auf, in den ein Verriegelungsmechanismus eingreift, auf den später noch eingegangen wird. Durch Lösen des Verriegelungsmechanismus kann der Schlitten 4 über die in Figuren 1 bzw. 2, 3 und 4 dargestellte Stellung hinaus nach unten geschoben und vermöge geeignet vorgesehener Mittel, die in den Figuren 5 und 12 zu sehen sind, vom Rahmen 2 gelöst werden.

Wie die Schnittdarstellung der Figur 4 deutlich zeigt, ist das Gehäuse 2 durch ein Bodenteil 18 und den darauf befestigten Rahmen 5 gebildet. Der Rahmen 5 ist über Stifte 19 mit dem Bodenteil 18 verbunden und klemmt dabei die in Streifenleitertechnik auf einer Platine ausgebildete Flächenantenne 16 fest. Im Gehäuseinrieren verläuft eine Antennenzuleitung 17 zu einem am Rand des Gehäuses 2 in einer Ausnehmung des Bodenteils 18 vorgesehenen (in der Schnittdarstellung der Figur 4 nicht gezeigten) HF-Steckverbinder.

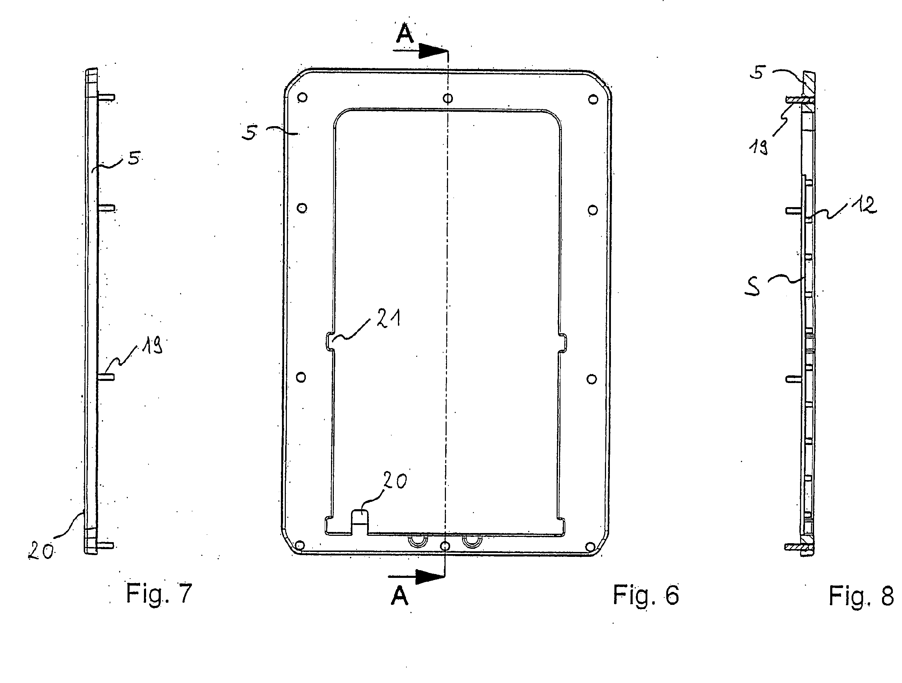

Der die Flächenantenne 16 im Bodenteil 18 fixierende Rahmen 5 ist in Figur 5 perspektivisch, in Figur 6 in einer Draufsicht, in Figur 7 in einer Seitenansicht sowie in Figur 8 in einer Schnittdarstellung entlang der Linie A-A der Figur 6 gezeigt. Er ist im wesentlichen rechteckig und weist an seinen Innenlängskanten die bereits erwähnten Nuten 12 für die Rastmechanik 11 des Schlittens 4 auf. An seinem bezogen auf die Darstellung der Figuren 1, 15 und 6 unterem Innenrand hat der Rahmen 5 eine vorstehende Lasche 20, die bei nach unten geschobenen Schlitten 4 in den Schlitz 14 eingreift und so als unterer Anschlag bezüglich der Längsverschiebung des Schlittens 4 dient. Drückt man die etwas nach oben vorstehend ausgebildete Lasche 20 zum Bodenteil 18 hin, gerät sie aus dem Schlitz 14 und der Schlitten 4 kann noch ein Stück weiter nach unten verschoben werden, so daß an den Innenlängskanten des Rahmens 5 vorgesehene Aussparungen 21 das bereits erwähnte Herausnehmen des Schlittens 4 aus der Führung des Rahmens 5 erlauben.

Weiter bildet der auf dem Bodenteil 18 befestigte Rahmen 5 einen Spalt S, der in Figur 4 deutlich zu sehen ist und in Figur 8 als Ausnehmung an der Unterseite der Innenlängskanten des Rahmens 5 erscheint. Der Spalt S besorgt die Längsführung des Schlittens 4 im Gehäuse 2.

Der Schlitten 4 hat, wie Figur 9 zeigt, mehrere Bohrungen 22 zum Befestigen der Halterung 3. In der hier gezeigten Ausführungsform ist die Halterung 3 mittels durch die Bohrungen 22 laufenden Schrauben mit dem Schlitten 4 verschraubt. Natürlich kommen auch andere Befestigungsmethoden in Frage - sowohl kraft-, form-, oder stoffschlüssige lageverstellbare Befestigungen, wie z. B. Langlöcher, als auch unlösbare Befestigungen, wie z. B. Klebungen.

Wie der Schnittdarstellung der Figur 11, die eine Ansicht entlang der Linie A-A der Figur 12 zeigt, zu entnehmen ist, weist der Schlitten 4 an der Unterseite vier Gleiter 23 auf, wobei bei eingesetztem Schlitten 4 jeweils ein Gleiterpaar an einer Längsinnenkante des Rahmens 5 bzw. in dem dort gebildeten Spalt S liegt. Zwischen jedem dieser Gleiterpaare verlaufen Führungsleisten 24, die an den Längsinnenkanten des Rahmens 5 anliegen und die Längsführung des Schlittens 4 verbessern, so daß dieser nicht ungewollt verdreht werden kann. Versteifungsstreben 25 an der Unterseite des Schlittens 4 verbessern die Stabilität und sichern weitgehend unabhängig vom Gewicht der Halterung 3 bzw. vom Gewicht des Mobilfunkgerätes eine reproduzierbare Lageeinstellung.

In der Seitenansicht der Figur 13 sowie der Schnittdarstellung der Figur 11 ist gut zu erkennen, daß im Bereich der Gleiter 23 der Rastmechanismus 11 vorgesehen ist, der, wie die Vergrößerung des mit Z bezeichneten Ausschnittes in Figur 13 zeigt, im Realisierungsbeispiel durch federvorgespannte Kugelvorsprünge 26 gebildet ist, die zwischen der Unterseite des Rahmens 4 und jedem Gleiter 23 angeordnet sind und in die Nuten 12 einrasten können.

Um eine genaue Zuordnung der aktuell eingestellten Lage der Halterung 3 auf dem Schlitten 4 gegenüber dem Gehäuse 2 mit der Flächenantenne 16 zu ermöglichen, kann auf die Flächenantenne 16 die in Figur 15 dargestellte Frontfolie 30 aufgeklebt werden, die neben entlang der Längsinnenkante des Rahmens 5 verlaufenden Indexmarkierung 31 auch zusätzlich eine Zentrumsmarkierung 32 aus konzentrischen, um das Zentrum 33 laufenden geschlossenen Kurven aufweist. Das Zentrum 33 ist der Punkt über der Flächenantenne 16, an dem eine maximale Koppelwirkung bei Gegenüberstellung einer Mobilfunkantenne zu erwarten ist.

Die Indexmarkierungen 31 erlauben es einem Benutzer, reproduzierbar eine Stellung des Schlittens 4 anzufahren. Es ist dadurch möglich, Wartungsanweisungen für einen bestimmten Mobilfunkgerätetyp mit der entsprechenden Indexangabe zu versehen, so daß Mobilfunkgeräte dieses Typs immer-zuverlässig in derselben gegenseitigen Ausrichtung von Antenne des Mobilfunkgerätes und Flächenantenne 16 getestet werden. Möchte man solche Vorgaben nicht machen, oder sind sie nicht verfügbar, kann ein Benutzer mit Hilfe der Zentrumsmarkierung 32 selbst die optimale Ausrichtung der Mobilfunkantenne zum Zentrum 33 der Flächenantenne 16 finden.

## Patentansprüche

1. Antennenkoppler (1) zum Testen von Mobilfunkgeräten, der ein Antennenelement (16) zur Funkkommunikation mit einem Mobilfunkgerät, ein Gehäuse (2) und ein Aufnahmeelement (3) zum Aufnahmen und Halten des Mobilfunkgerätes aufweist, **dadurch gekennzeichnet, daß** das Aufnahmeelement (3) eine Befestigungseinrichtung aufweist, mit der es lösbar in verschiedenen Lagen zum Antennenelement (6) befestigbar ist, wobei ein Rahmen (5) die Oberseite des Gehäuses (2) bildet, und die Befestigungseinrichtung einen Schlitten (4) aufweist, der an dem das Antennenelement haltenden Rahmen (5) mindestens einachsig verschiebbar geführt ist, und wobei die als Flächenantenne ausgebildete Antenne (16) im Gehäuse (2) unterhalb des Rahmens (5) angeordnet ist.

2. Antennenkoppler nach Anspruch 1, **dadurch gekennzeichnet, daß** die Flächenantenne in Streifenleitertechnik ausgebildet ist.

3. Antennenkoppler nach Anspruch 1 oder 2, **gekennzeichnet durch** einen Rastmechanismus (11, 12), der den Schlitten (4) in verschiedenen Stellungen, die den verschiedenen Lagen zugeordnet sind, lösbar arretiert.

4. Antennenkoppler nach Anspruch 3, **dadurch gekennzeichnet, daß** der Schlitten (4) in einer am Rahmen (5) ausgebildeten Nut (S) geführt ist.

5. Antennenkoppler nach einem der obigen Ansprüche, **gekennzeichnet durch** eine Zeigeeinrichtung (13) und damit zusammenwirkende Markierungen (31), die die Stellung des Aufnahmeelementes (3) bzw. des Antennenelementes (16) anzeigen.

6. Antennenkoppler nach einem der obigen Ansprüche, **dadurch gekennzeichnet, daß** die verschiedenen Lagen eine mindestens zweidimensionale Relativ-Verschiebung zwischen Aufnahmeelement (3) und Antennenelement (16) ergeben.

7. Antennenkoppler nach einem der obigen Ansprüche, **gekennzeichnet durch** eine über dem Antennenelement (16) angebrachte Grafik (30), die ein Zentrum (33) des Antennenelementes (16) anzeigt, in dem eine maximale Funk-Koppelwirkung gegeben ist.

8. Antennenkoppler nach einem der obigen Ansprüche, **dadurch gekennzeichnet, daß** das Aufnahmeelement eine Universal-Mobiltelefonhalterung (3) aufweist.

9. Antennenkoppler nach einem der vorhergehenden Ansprüche, **dadurch gekennzeichnet, daß** der Schlitten einen Schlitz aufweist, in den ein Verriegelungsmechanismus eingreift.

10. Antennenkoppler nach Anspruch 9, **dadurch gekennzeichnet, daß** durch ein Lösen des Verriegelungsmechanismus der Schlitten vom Rahmen lösbar ist.

## Claims

1. An antenna coupler (1) for testing of wireless devices, said coupler comprising an antenna element (16) for wireless communication with a wireless device, a housing (2) and an accommodating element (3) for accommodating and holding the wireless device, **characterised in that** the accommodating element (3) comprises a fastening means by which it can be releasably fastened in various positions relative to the antenna element (6), the top surface of the housing (2) being formed by a frame (5) and the fastening means comprising a slider (4) which is guided, displaceable along at least one axis, on said frame (5) holding the antenna element, wherein the antenna (16), provided as a planar antenna, is arranged below the frame (5) in the housing (2).

2. Antenna coupler according to claim 1, **characterised in that** the planar antenna is provided by stripline technology.

3. Antenna coupler according to claim 1 or 2, **characterised by** a plug-in mechanism (11, 12) which releasably locks the slider (4) in various arrangements that are assigned to the various positions.

4. Antenna coupler according to claim 3, **characterised in that** the slider (4) is guided in a groove (S) provided on the frame (5).

5. Antenna coupler according to any one of the above claims, **characterised by** a pointing means (13) and cooperating marks (31) which indicate the arrangement of the accommodating element (3) or of the antenna element (16).

6. Antenna coupler according to any one of the above claims, **characterised in that** the various positions yield an at least two-dimensional relative displacement between the accommodating element (3) and the antenna element (16).

7. Antenna coupler according to any one of the above claims, **characterised by** graphics (30) provided above the antenna element (16), said graphics indicating a centre (33) of the antenna element (16), at which centre a maximum wireless coupling effect is given.

8. Antenna coupler according to any one of the above claims, **characterised in that** the accommodating element comprises a universal mobile phone holder (3).

9. Antenna coupler according to any one of the preceding claims, **characterised in that** the slider comprises a slot engaging a locking mechanism.

10. Antenna coupler according to claim 9, **characterised in that** the slider is releasable from the frame by loosening the locking mechanism.

## Revendications

1. Coupleur d'antenne (1) pour tester des émetteurs radio mobiles, qui présente un élément d'antenne pour la communication par radio avec un émetteur radio mobile, un boîtier (2) et un élément de logement (3) pour recevoir et maintenir l'émetteur radio mobile **caractérisé en ce que** l'élément de logement (3) présente un dispositif de fixation par lequel il peut être fixé à l'élément d'antenne (16) dans différentes positions et de façon amovible, un cadre (5) formant la partie supérieure du boîtier (2) et le dispositif de fixation présentant un curseur (4) qui est guidé de façon à coulisser selon au moins un axe sur le cadre (5) supportant l'élément d'antenne, et l'antenne (16), conformée en antenne de surface, étant disposée dans le boîtier (2) au-dessous du cadre (5).

2. Coupleur d'antenne selon la revendication 1, **caractérisé en ce que** l'antenne de surface est constituée selon la technique des guides d'onde à rubans.

3. Coupleur d'antenne selon les revendications 1 et 2, **caractérisé par** un mécanisme d'arrêt à crans (11, 12) qui bloque de façon amovible le curseur (4) à différents emplacements qui correspondent aux différentes positions.

4. Coupleur d'antenne selon la revendication 3, **caractérisé en ce que** le curseur (4) est guidé dans une rainure (S) formée sur le cadre (5).

5. Coupleur d'antenne selon l'une des revendications précédentes, **caractérisé par** un dispositif d'indicateur (13) et des marques coopérant avec celui-ci (31), qui indiquent la position de l'élément de logement (3) ou de l'élément d'antenne (16).

6. Coupleur d'antenne selon l'une des revendications précédentes, **caractérisé en ce que** les différentes positions donnent un décalage relatif entre l'élément de logement (3) et l'élément d'antenne (16) à au moins deux dimensions.

7. Coupleur d'antenne selon l'une des revendications précédentes, **caractérisé par** une gravure (30), pratiquée au-dessus de l'élément d'antenne (16), qui indique un centre (33) de l'élément d'antenne (16) où un effet de couplage radio maximal est présent.

8. Coupleur d'antenne selon l'une des revendications précédentes, **caractérisé en ce que** l'élément de logement présente un support (3) de téléphone mobile universel.

9. Coupleur d'antenne selon l'une des revendications précédentes, **caractérisé en ce que** le curseur présente une fente dans laquelle agit un mécanisme de verrouillage.

10. Coupleur d'antenne selon la revendication 9, **caractérisé en ce que** le curseur peut être libéré du cadre par un relâchement du mécanisme de verrouillage
